Europäisches Patentamt

(19) European Patent Office

Office européen des brevets

(11) Publication number: **0 113 008**

**A1**

(12) # EUROPEAN PATENT APPLICATION

(21) Application number: **83111415.2**

(22) Date of filing: **15.11.83**

(51) Int. Cl.³: **H 02 K 41/035**

(30) Priority: **29.12.82 US 454809**

(43) Date of publication of application:
**11.07.84 Bulletin 84/28**

(84) Designated Contracting States:
**DE FR GB**

(71) Applicant: **International Business Machines Corporation
Old Orchard Road
Armonk, N.Y. 10504(US)**

(72) Inventor: **Lissner, Rudolf Werner
3293 Gardendale Drive
San Jose CA 95118(US)**

(72) Inventor: **Mathurin, Edward Landais
16799 Potter Court
Los Gatos CA 95030(US)**

(72) Inventor: **Moss, Stanton Kline
8260 El Matador Drive
Gilrov CA 95020(US)**

(74) Representative: **Gasslander, Sten et al,
IBM Svenska AB Box 962
S-181 09 Lidingö(SE)**

(54) **Magnetic actuator.**

(57) A low mass magnetic actuator has a center pole piece surrounded by permanent magnets which produce a working gap extending along the length of the magnets with dual flux paths. This results in a short mangetic structure with a high percentage of the actuator coil within the working gap flux in all coil positions.

FIG. 1B

Magnetic actuator.

This invention relates to magnetic actuators and more particularly to low mass actuators employed to position one or more magnetic heads at different concentric tracks in a magnetic disk file.

In prior art magnetic disk files, the head accessing system includes magnetic transducers, air bearing head sliders to which the transducers are attached, head suspensions on which the sliders are mounted, head arms to which the suspensions are joined, and an actuator, such as a voice coil motor, coupled to the entire assembly. It is apparent that a system of this type has many components, requires many manufacturing steps and processes, and is costly to manufacture and maintain. Also, the magnitude of the moving mass used for accessing to different data tracks on a disk surface limits the accessing speed. Other problems, such as misaligment, skewing, inter alia, are experienced with such accessing systems.

It is clearly apparent that the following characteristics are important to satisfy the actuator requirements of future high track density, low access time disk files: low moving mass, fast response, low heat dissipation, low total weight and size, and low cost. In addition, future actuators will have to satisfy modular concept requirements, such as ease of installation, and inter-changeability, to enable the use of more than one actuator per radial disk stack location.

Flat coil actuators have been proposed for future disk files, but such actuators are better suited for short moves. The longer the stroke length (or move), the more non-contributing coil mass is added to the moving mass in such actuators. In addition, it is necessary to provide opposite direction flux paths in these actuators, which require a rather long and heavy magnetic circuit structure.

The following prior art patents show various types of magnetic actuators.

The device of U.S. Patent 3,886,595, Swaim et al, has a cylindrical air gap and is a short coil, long gap design similar to the IBM 3340 actuator, and does not have a dual flux return path.

In the U.S. Patent 4,282,501 Myers permanent magnets are not used. This patent utilizes a second flux-carrying path, one each for each source of magnetic flux. The device is of the double-acting solenoid type with the working gap normal to the direction of motion. The forces are not generated by interaction of a coil (bobbin) with a permanent magnetic field, and the moving element is not the coil. Two coils have to be energized to accomplish balancing of forces and analog control of position.

U.S. Patent 4,315,197, Studer, shows multiple permanent magnetic assemblies placed along the accessing direction. Each magnetic assembly has a single direction flux flow. The controlling element in this patent is a stationary coil which, when powered, adds to or subtracts from flux supplied by the permanent magnets. The moving member of the actuator consists of steel to support magnetic flux.

The present invention provides a low mass magnetic actuator having a center pole piece surrounded by permanent magnets which produces a working gap extending along the length of the magnets with dual flux paths. This results in a short magnetic structure with a high percentage of the

0113008

actuator coil within the working gap flux in all coil positions.

The invention will now be more closely described with reference to the accompanying drawings, where

Figs. 1A and 1B illustrate the magnetic portion of an actuator in accordance with the invention using an elliptically-shaped center piece;

Fig. 2 is an exploded view of an actuator of the invention with a generally rectangular coil and center pole piece;

Fig. 3 illustrates as number of actuators showing how the present design facilitates the provision of one actuator for each disk surface, or pair of facing disk surfaces;

Fig. 4 illustrates asn embodiment of the invention which permits the use of lower coercivity magnets;

Figs. 5A, 5B and 5C are circuit diagrams showing different ways of energizing the actuator coil; and

Figs. 6A and 6B show an actuator of the present invention provided with a shorted turn.

The present invention provides a magnetic actuator with a shorter magnetic circuit structure and a greater percentage of the coil within the working gap flux than prior art actuators. The drawback of a center pole in prior designs is the magnetic flux saturation of the center pole. This problem is surmounted in the present invention by providing a dual flux path which allows doubling of the working gap flux density. In addition, the dual flux path design of this invention reduces external flux leakage because of its enclosed magnetic circuit, hence eliminating the need for costly magnetic shielding.

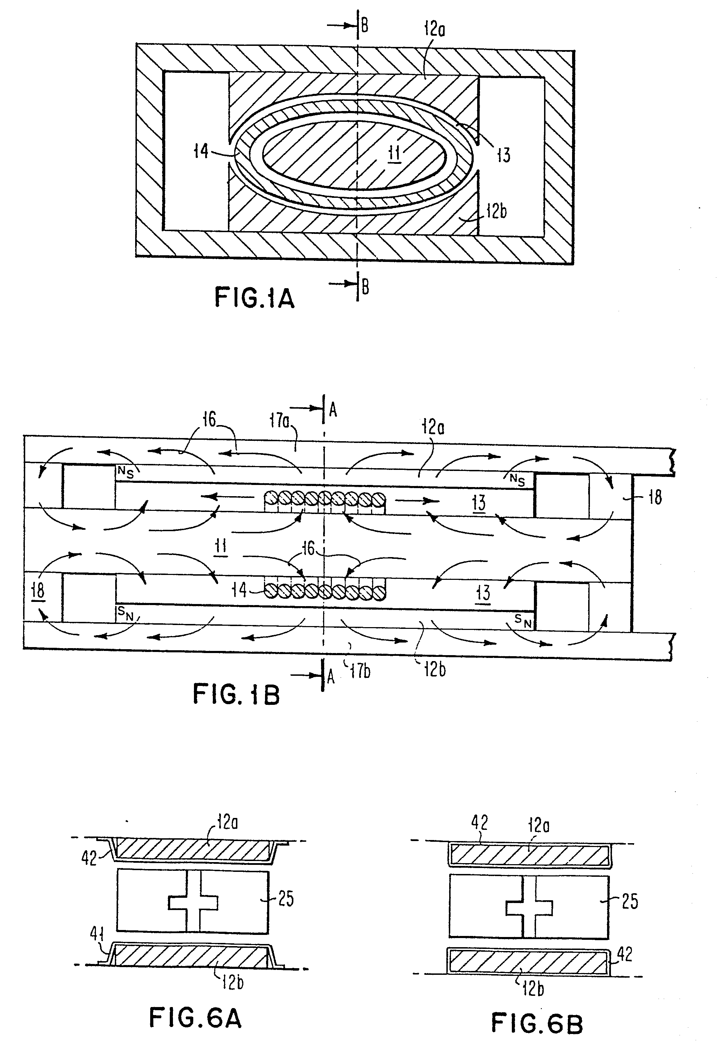

FIGS. 1A and 1B illustrate one embodiment of the magnetic portion of the present actuator. This includes an elliptically-shaped center pole piece 11 surrounded by a pair of curved permanent magnet members 12a, 12b having the shape and polarities shown in FIG. 1B, and being oriented normal to center pole piece 11. Magnets 12a, 12b are secured to magnetic return path members 17a, 17b, respectively, and the magnetic structure further includes magnetic end return members 18. The space between center pole piece 11 and magnets 12a, 12b forms a working gap 13 in which is disposed a movable coil 14. As can be seen from FIG. 1B, the flux from magnets 12a, 12b extends through the working gap 13 along the lengths of the magnets and beyond, thereby resulting in a large amount of coil 14 being in the working gap at all coil positions. The dual flux path provided by the structure of the present invention is also clearly shown by the flux arrows 16 in FIG. 1B.

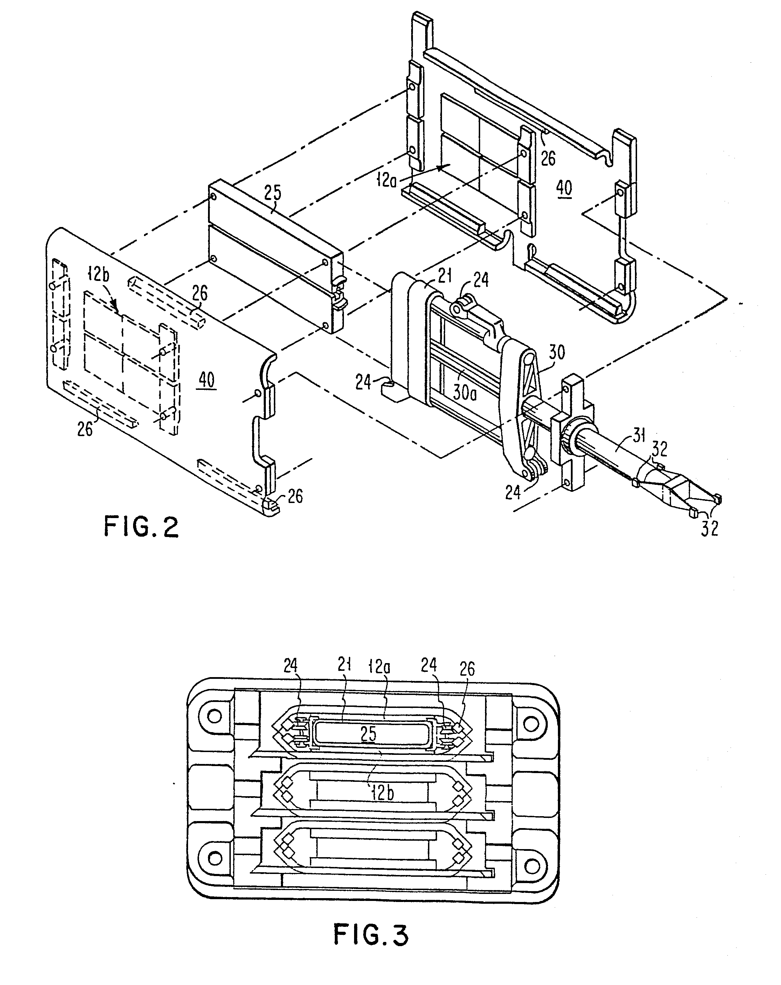

A modification of the invention is shown in the exploded view of FIG. 2 in which a generally rectangular coil 21 surrounds a center pole piece 25. Coil 21 is mounted on a coil support member 30 having a stiffening member 30a extending through the center thereof and movable through a central opening in the center pole piece 25. The structure of FIG. 2 is shown provided with bearings 24 which are attached to coil support 30, and which ride on bearing rails 26 mounted on housing 40 to guide coil 21 as it moves. In FIG. 2, magnets 12a, 12b are shown made up of four separate magnet members each. A head carrier member 31 is attached to coil 30 support and moves therewith to position one or more magnetic heads 32 (FIG. 2) at different concentric recording tracks of a magnetic recording disk, not shown.

The magnetic circuit of FIG. 2 forms an almost completely enclosed shell which is self-shielding. Another unique feature is that the top outside flux return is also used to mount the actuator. Both flux returns are at equal magnetic potential, thereby eliminating flux leakage.

FIG. 3 shows how the flat configuration facilitates the stacking of multiple actuators so that each disk surface, or pair of facing disk surfaces, can have its own dedicated actuator.

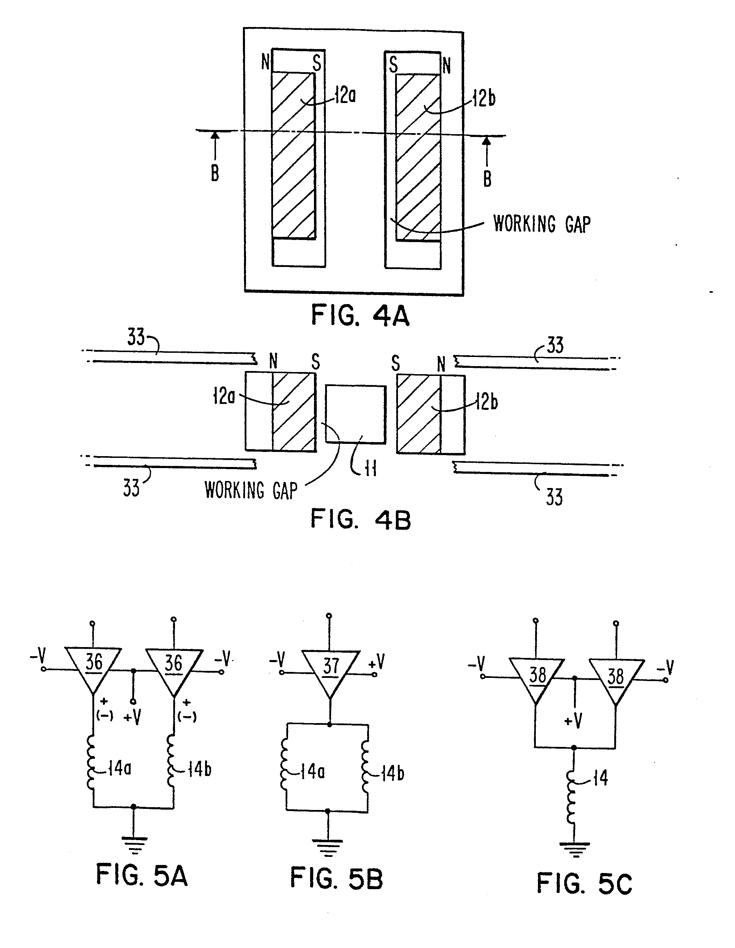

To enable the use of lower coercivity magnets, the same dual flux path configuration may be employed, except the location of magnets 11 is rotated $90^{\circ}$, as shown in FIGS. 4A and 4B.

The control of the moving coil 14 is dependent on how the coil is wound. Several control schemes are possible to satisfy power supply voltage and current, time constant, drive circuit cost and mechanical requirements. Multiple coils or drive circuits in parallel can be used, as shown in FIGS. 5A, 5B, 5C, to accomplish this. In FIGS. 5A and 5B, coil 14 is split into two parts 14a, 14b. In FIG. 5A, coil halves 14a, 14b are energized by separate circuits 36, while in FIG. 5B a single circuit 37 supplies both halves 14a, 14b. In FIG. 5C, separate sources 38 jointly supply coil 14. The configurations of FIGS. 5A and 5B allow a lower power supply voltage; those of FIGS. 5A and 5C can use lower current capacity drive circuits. The parallel configurations can be extended to more than two branches if necessary.

FIGS. 6A and 6B show the application of shorted turns in a different way. Present day state-of-the-art designs utilize one shorted turn in proximity to the outside or inside periphery of the moving coil. The purpose of shorted turns is to provide a low resistance secondary coil to improve the current rise and bandwidth of the actuator.

FIG 6A shows shorted turns 41 in the form of conductive material caps on magnets 12a, 12b.

FIG. 6B shows two fully encapsulated shorted turns 42 which extend completely around magnets 12a, 12b, and which can be provided by plating a conductive material on the magnets. Both methods furnish a magnetically contamination-free assembly at the same time. More than two shorted turns can be utilized when more than two permanent magnets are used in the device.

CLAIMS

1. A magnetic actuator comprising

a plurality of elongated permanent magnets, (12A, 12B) a center pole piece (11) disposed and uniformly spaced between said permanent magnets,

magnetic return members (18) connected to said permanent magnets and to said center pole to form a closed magnetic structure with dual flux return paths,

the space between said center pole piece and said permanent magnets forming a working gap (13), flux from said permanent magnets extending through said working gap along the length of said permanent magnets, and

an electrically energized movable coil (14) disposed in said working gap and surrounding said center pole piece, said coil being movable in response to electrical energization.

2. A magnetic actuator in accordance with claim 1 in which said center pole piece (11) has an elliptical cross-section (Fig. 1).

3. A magnetic actuator in accordance with claim 1 in which said center pole piece (25) has a rectangular cross-section (Fig. 2).

4. A magnetic actuator in accordance with claim 1 including a carrier member (30) connected to said coil (21) for carrying a load to be moved (Fig. 2).

5. A magnetic actuator in accordance with claim 4 including

bearing members (24) connected to said coil (21), and guide rail members (26) engaging said bearing members for guiding said coil during movement (Fig. 2).

6.    A magnetic actuator in accordance with claim 1 including a coil support structure (30) for mounting said coil (Fig. 2).

7.    A magnetic actuator in accordance with claim 1 including shorted turn members (41, 42) on said magnets (Fig. 6).

FIG.1A

FIG.1B

FIG.6A

FIG.6B

FIG. 2

FIG. 3

FIG. 4A

FIG. 4B

FIG. 5A

FIG. 5B

FIG. 5C

0113008

European Patent
Office

EUROPEAN SEARCH REPORT

Application number

EP 83 11 1415

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 318 038 (NIPPON ELECTRIC)<br>* Column 2, line 56 - column 3, line 17 * | 1,3-6 | H 02 K 41/035 |
| A | DE-A-1 804 479 (RATCLIFF et al.)<br>* Page 7, lines 12-15; figure 4 * | 2 | |
| X | PATENTS ABSTRACTS OF JAPAN, vol. 5, no. 70(E-56)(742), 12th May 1981<br>& JP - A - 56 19606 (NIPPON DENKI K.K.) 24-02-1981 * Whole document * | 1,3-6 | |
| X | PATENTS ABSTRACTS OF JAPAN, vol. 6, no. 47(E-99)(925), 26th March 1982<br>& JP - A - 56 162 966 (MATSUSHITA DENKI SANGYO K.K.) 15-12-1981 * Whole document * | 1,3-6 | TECHNICAL FIELDS SEARCHED (Int. Cl. ³)<br><br>H 02 K 41/00<br>G 11 B 5/55 |
| A | US-A-4 072 101 (J. LA GARCIA et al.)<br>* Column 5, line 31 - column 6, line 7 * | 1,3-6 | |
| A | US-A-3 889 139 (HUGHES)<br>* Column 3, lines 60-68 * | 7 | |
|  | --- -/- | | |

The present search report has been drawn up for all claims

| Place of search | Date of completion of the search | Examiner |
|---|---|---|
| THE HAGUE | 20-03-1984 | STEINMETZ L.J.P. |

European Patent
Office

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. 3) |
| P,X | EP-A-0 084 124 (BRENDE) <br> * Page 2, paragraph 4 - page 3, paragraph 1 * <br><br> --- | 1,3-7 | |
| P,X | EP-A-0 093 715 (SUTTON) <br> * Page 8, line 14 - page 10, line 18 * <br><br> ----- | 1,3-6 | |
| | | | TECHNICAL FIELDS SEARCHED (Int. Cl. 3) |

The present search report has been drawn up for all claims

| Place of search <br> THE HAGUE | Date of completion of the search <br> 20-03-1984 | Examiner <br> STEINMETZ L.J.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82